# EUROPÄISCHE PATENTANMELDUNG

(11) **EP 4 793 208 A1**
(43) Veröffentlichungstag der Anmeldung: **19.08.2026**
(21) Anmeldenummer: 26152561.2
(22) Anmeldetag: 19.01.2026
(51) Int. Cl.: B65G 21/20

(54) **VERSTELLEINRICHTUNG EINER MEHRGASSIGEN BEHÄLTERFÜHRUNGSEINRICHTUNG**

(30) Priorität: 18.02.2025 DE 102025105957
(71) Anmelder: KHS GmbH, 44143 Dortmund (DE)
(72) Erfinder: Stenner, Holger, 44143 Dortmund (DE)

(57) **Zusammenfassung**

Die Erfindung betrifft eine Verstelleinrichtung zum Verstellen von zwei jeweils eine Behältergasse (20) seitlich begrenzenden Führungselementen (21a, b) zum Führen von Behältern oder Gebinden einer mehrgassigen Behälterführungsvorrichtung. Um eine Verstelleinrichtung (2) bereitzustellen, die besonders kostengünstig hergestellt werden kann, einen einfachen und kompakten Aufbau aufweist sowie ein eingestelltes Führungselement (21a, b) besonders lagestabil halten kann, ist vorgesehen, dass die Verstelleinrichtung (2) zwei, jeweils mit einem der beiden Führungselemente (21a, b) verbundene Verstellelemente (3a, b) sowie wenigstens einen um eine Rotationsachse (R) verdrehbaren Antriebskörper (4a, b) aufweist, wobei der Antriebskörper (4a, b) wenigstens ein zumindest abschnittsweise um die Rotationsachse (R) des Antriebskörpers (4a, b) spiralförmig verlaufendes Steuerprofil (5) aufweist und die beiden Verstellelemente (3a, b) jeweils derart mit dem wenigstens einen Steuerprofil (5) des wenigstens einen Antriebskörpers (4a, b) zusammenwirken, dass ein Verdrehen des Antriebskörpers (4a, b) ein Verstellen der Verstellelemente (3a, b) und damit der Führungselementev. PA Nagler (21a, b) quer zur Transportrichtung bewirkt.

## Beschreibung

Die Erfindung betrifft eine Verstelleinrichtung zum Verstellen von zwei jeweils eine Behältergasse seitlich begrenzenden Führungselementen zum Führen von Behältern oder Gebinden einer mehrgassigen Behälterführungsvorrichtung, eine entsprechende mehrgassige Behälterführungseinrichtung sowie ein Verfahren zur Einstellung des Abstandes von zwei jeweils eine Behältergasse seitlich begrenzenden Führungselementen zum Führen von Behältern oder Gebinden mittels einer Behälterführungseinrichtung.

In Behälterbehandlungsanlagen, beispielsweise in Abfüllanlagen zum Abfüllen von Lebensmitteln und Getränken in Behälter, wie Flaschen, Dosen oder dergleichen, werden die Behälter oft über lange Transportwege mittels einer Transporteinrichtung transportiert. Die einzelnen Behälter sowie auch mehrere, zu einem Gebinde zusammengefasste Behälter werden dabei mithilfe von Führungselementen, wie Geländern, einer Behälterführungseinrichtung durch die Behälterbehandlungsanlage geführt. Dabei ist es für einen Teil solcher Behälterbehandlungsanlagen üblich, dass die Behälter einreihig in einer von mehreren Gassen geführt werden müssen, um dann einzeln der Behälterbehandlungsanlage zugeführt werden zu können.

Dabei besteht typischerweise das Problem, dass bei parallel verlaufenden, eng aneinanderliegend angeordneten Transporteinrichtungen unterhalb jeweils einer der Gassen eine Anpassung des Abstandes der Führungselemente zueinander aufgrund der engen räumlichen Verhältnisse kompliziert zu realisieren ist. Im Stand der Technik wird dies, insbesondere im Fall eines zweigassigen Transports, typischerweise derart gelöst, dass die beiden innenliegenden Führungselemente feststehend gebildet sind und die beiden außenliegenden Führungselemente mit einer Verstelleinrichtung zur Formatanpassung verbunden sind.

Bei Behälterbehandlungsanlagen, die unabhängig von dem Format der Behälter grundsätzlich ein zentriertes Zuführen der Behälter erfordern, wie beispielsweise bei einem Dosendoppelrinser, reicht eine Verstellung der jeweils außenliegenden Führungselemente jedoch nicht aus. Vielmehr muss zum zentrierten Zuführen auch die eng aneinanderliegenden, innenliegenden Führungselemente an das Format des jeweiligen Behälters angepasst werden.

Bekannte Behälterführungseinrichtungen, welche beispielsweise aus der EP 3 063 081 B1 bekannt sind, weisen hierzu kompliziert ausgebildete Verstellmechanismen mit einem entsprechend hohen Platzbedarf auf, um eine erforderliche Verstellung zu ermöglichen. Zudem sind die bekannten Verstelleinrichtungen sehr teuer und aufwändig in der Wartung und Montage. Schließlich ist bei der Mehrzahl der aus dem Stand der Technik bekannten Behälterführungseinrichtungen nach einem Einstellen einer neuen Führungselementposition ein zeitaufwändiges Festlegen der eingestellten Führungselementposition notwendig, um eine ungewollte Veränderung des Abstands der Führungselemente zueinander während des Betriebs in Folge der Krafteinwirkungen der transportierten Behälter oder Gebinde zu verhindern.

Der Erfindung liegt daher die Aufgabe zugrunde, eine Verstelleinrichtung bereitzustellen, die besonders kostengünstig hergestellt werden kann, einen einfachen und kompakten Aufbau aufweist sowie ein eingestelltes Führungselement besonders lagestabil halten kann.

Die Aufgabe wird erfindungsgemäß durch eine Verstelleinrichtung mit den Merkmalen des Anspruchs 1, durch eine Behälterführungseinrichtung mit den Merkmalen des Anspruchs 15 sowie durch ein Verfahren zur Einstellung des Abstandes von zwei jeweils eine Behältergasse seitlich begrenzenden Führungselementen mit den Merkmalen des Anspruchs 16 gelöst. Vorteilhafte Weiterbildungen der Behälterführungseinrichtung, aber auch des Verfahrens sind in den abhängigen Ansprüchen angegeben.

Die erfindungsgemäße Verstelleinrichtung zum Verstellen von zwei, insbesondere im Abstand voneinander angeordneten und/oder sich in Transportrichtung einer Behältertransporteinrichtung erstreckenden, jeweils eine Behältergasse seitlich begrenzenden Führungselementen zum Führen von Behältern oder Gebinden quer zur Transportrichtung und/oder zum Einstellen jeweils einer Gassenbreite weist zwei, jeweils mit einem der beiden Führungselemente verbundene Verstellelemente sowie wenigstens einen um eine Rotationsachse verdrehbaren Antriebskörper auf, wobei der Antriebskörper wenigstens ein zumindest abschnittsweise um die Rotationsachse des Antriebskörpers spiralförmig verlaufendes Steuerprofil aufweist. Weiterhin ist vorgesehen, dass die beiden Verstellelemente jeweils derart mit dem wenigstens einen Steuerprofil des wenigstens einen Antriebskörpers verbunden sind und insbesondere zusammenwirken, dass ein Verdrehen des Antriebskörpers ein Verstellen der Verstellelemente und damit der Führungselemente quer zur Transportrichtung bewirkt.

Die erfindungsgemäße mehrgassige Behälterführungseinrichtung weist wenigstens zwei im Abstand voneinander angeordnete, sich in Transportrichtung einer Behältertransporteinrichtung erstreckende und jeweils eine Behältergasse seitlich begrenzende Führungselemente zum Führen von Behältern oder Gebinden und mindestens eine erfindungsgemäße Verstelleinrichtung zum Verstellen beider Führungselemente quer zur Transportrichtung und/oder zum Einstellen jeweils einer Gassenbreite auf.

Das erfindungsgemäße Verfahren zur Einstellung des Abstandes von zwei jeweils eine Behältergasse seitlich begrenzenden Führungselementen zum Führen von Behältern und/oder Gebinden mittels einer erfindungsgemäßen Verstelleinrichtung weist als Verfahrensschritte zunächst ein Drehen eines Antriebskörpers einer Verstelleinrichtung zum Verstellen beider, jeweils an einem Verstellelement der Verstelleinrichtung festgelegten Führungselemente jeweils quer zur Transportrichtung, gefolgt von einem Beenden des Drehens nach Erreichen einer festgelegten Position der Führungselemente zueinander auf.

Durch eine Gestaltung einer Verstelleinrichtung mit einem rotierbaren Antriebskörper sowie damit zusammenwirkenden Verstellelementen kann eine besonders einfache sowie kostengünstig herzustellende Konstruktion erreicht werden, wobei insbesondere aufgrund der Wechselwirkung der Verstellelemente mit dem zumindest abschnittsweise spiralförmig verlaufenden Steuerprofil zudem ein selbsthemmender Antrieb vorgesehen ist, der keine zusätzlichen Mittel zum Fixieren der Führungselemente in einer einmal eingestellten Position notwendig macht. Weiterhin wird durch die erfindungsgemäße Gestaltung ein besonders kompakter Aufbau ermöglicht. Während beispielsweise bei einem zweigassigen Dosentransport bislang lediglich ein minimaler Abstand der beiden innenliegenden Führungselemente von 528 mm möglich war, kann mittels der vorliegenden Erfindung dieser Abstand deutlich verringert werden. Bevorzugt ist dabei ein minimaler Abstand von 350 mm, besonders bevorzugt von 250 mm und insbesondere bevorzugt von 200 mm erreichbar.

Unter einer mehrgassigen Behälterführungseinrichtung wird generell eine Vorrichtung verstanden, die gebildet ist, Behälter und/oder Gebinde in mehr als einer Gasse zu führen. Dabei erfolgt das Führen der Behälter und/oder Gebinde bevorzugt einreihig, d.h. derart, dass innerhalb einer Gasse alle Behälter und/oder Gebinde hintereinander angeordnet sind. Entsprechend ist es auch bevorzugt, dass die Gassenbreite, die insbesondere durch die die Gasse beidseitig begrenzenden Führungselemente gegeben ist, im Wesentlichen der Breite eines zu transportierenden Behälters und/oder Gebindes entspricht. Bevorzugt ist die Gassenbreite geringer als das 1,8-fache, besonders bevorzugt geringer als das 1,5-fache, ganz besonders bevorzugt geringer als das 1,25-fache und insbesondere bevorzugt geringer als das 1,1-fache der Breite eines Behälters und/oder Gebindes. Grundsätzlich kann die Behälterführungseinrichtung eine eigenständige Baueinheit oder sogar Vorrichtung sein. Generell ist aber auch denkbar, dass die Behälterführungseinrichtung Teil einer Transporteinrichtung und/oder einer Behälterbehandlungsmaschine ist. Ebenfalls ist bevorzugt, dass die Behälterführungseinrichtung zum Führen der Behälter oder der Gebinde in zwei Gassen und/oder in zwei zueinander parallelen, einreihigen Verläufen gebildet ist.

Unter einer Behältertransporteinrichtung wird generell eine Vorrichtung verstanden, die mehrere Behälter zugleich transportieren kann. Dabei erfolgt ein seitliches Führen der Behälter mittels der Behälterführungseinrichtung. Bevorzugt werden die Behälter oder Gebinde dabei stehend, insbesondere auf einem Transportband, transportiert. Ein mehrgassiger Transport kann dabei generell mittels einer einzelnen Transporteinrichtung und insbesondere mittels eines einzelnen Transportbandes erreicht werden, auf dessen Oberfläche mittels der Behälterführungseinrichtung mehrere, voneinander getrennte Gassen gebildet werden. Bevorzugt ist jedoch im Bereich jeder Gasse und insbesondere am Boden jeder Gasse eine eigenständige Transporteinrichtung und insbesondere ein Transportband angeordnet. Entsprechend weist die Behältertransporteinrichtung bevorzugt parallel laufende, eng aneinanderliegend angeordnete und/oder Behälter oder Gebinde eines gleichen Formats transportierende Transporteure und insbesondere Transportbänder auf.

Das Führungselement kann grundsätzlich beliebig gebildet sein und ist zur seitlichen Begrenzung einer Transportstrecke und/oder zum seitlichen Führen eines transportierten Behälters und/oder Gebindes vorgesehen. Dabei erstreckt sich das Führungselement bevorzugt entlang eines Teils der Transportstrecke und besonders bevorzugt im Wesentlichen über die gesamte Länge der Behältertransporteinrichtung. Dabei kann sich über diese Länge ein einziges Führungselement erstrecken oder aber mehrere Führungselemente hintereinander und/oder sich aneinander anschließend angeordnet sein. Das Führungselement ist bevorzugt ein Geländer, insbesondere zum Behälter- und/oder Gebindetransport. Dazu weist das Führungselement weiterhin bevorzugt eine glatte Führungsoberfläche auf, die in Richtung der zu transportierenden Behälter und/oder Gebinde gerichtet ist.

Bei den zu transportierenden Behältern kann es sich grundsätzlich um beliebige Behälter handeln, wobei es sich bevorzugt um Behälter zur Aufnahme von Nahrungsmitteln und besonders bevorzugt zur Aufnahme von Getränken handelt. Dabei können die Behälter eine beliebige Form aufweisen und beispielweise als Flaschen, Dosen, Verbundmaterialkartons oder in beliebiger anderer Weise gebildet sein. Insbesondere kann es sich dabei um Getränkedosen handeln, wobei auch Flaschen, beispielsweise aus Glas oder Kunststoff, insbesondere Polyethylenterephthalat (PET), denkbar sind. Bei einem Gebinde handelt es sich bevorzugt um mehrere, insbesondere zueinander identische Behälter, die unmittelbar aneinander oder aber mittels Hilfsmitteln, wie einem Tray, einer Umschrumpfung, einer Folie, einem Getränkekasten, einer Umhüllung aus Kunststoff, Papier oder Pappe oder in beliebiger anderer Weise zusammengehalten werden.

Die Behälterführungseinrichtung und/oder eine anderweitige Vorrichtung aufweisend wenigstens eine erfindungsgemäße Verstelleinrichtung ist bevorzugt zum Zuführen zu einem Doppelrinser zum zeitgleichen Reinigen von zwei Getränke- oder Lebensmitteldosen vorgesehen. Generell kann die erfindungsgemäße Behälterführungseinrichtung jedoch an einer beliebigen Transportvorrichtung für Behälter und/oder Gebinde angeordnet werden, wobei eine Verwendung im Zusammenhang mit einer lebensmittelverarbeitenden Anlage, einer Behälterbehandlungsanlage und insbesondere einer Behälterreinigungsanlage und/oder einer Behälterfüllanlage bevorzugt ist.

Um die Führungselemente quer zur Transportrichtung verstellen zu können und so die Gassenbreite an das jeweilige Behälterformat anpassen zu können, ist wenigstens eine Verstelleinrichtung und sind bevorzugt für jedes Führungselement mehrere Verstelleinrichtungen vorgesehen, die besonders bevorzugt alle identisch zueinander gebildet sind. Dabei ist eine Verstelleinrichtung erfindungsgemäß gebildet, um zugleich zwei Führungselemente quer zur Transportrichtung zu verstellen und/oder die Gassenbreite, bevorzugt zur Formateinstellung, insbesondere bei einem Wechsel des Behälter- und/oder Gebindeformats, einzustellen.

Um ein solches Einstellen der Position der Führungselemente durch ein Verschieben quer zur Transportrichtung zu ermöglichen, weist die Verstelleinrichtung für jedes der beiden Führungselemente ein Verstellelement auf, an dem das Führungselement festgelegt werden kann und/oder durch das das Führungselement in seiner Position gehalten wird. Bevorzugt sind die beiden Verstellelemente identisch zueinander gebildet und/oder weisen zumindest abschnittsweise beidseitig eine ebene Oberfläche zum gleitenden Führen der Verstellelemente auf. Weiterhin bevorzugt sind die Verstellelemente aus Metall gebildet und besonders bevorzugt im Wesentlichen einstückig aus einem Blech geformt, gegebenenfalls insbesondere ausschließlich eines daran festgelegten Steuerbolzens. An einem Ende, insbesondere an einer einem Steuerbolzen gegenüberliegenden Seite, weist das Verstellelement bevorzugt eine Führungselementaufnahme zum Festlegen eines Führungselements auf, wobei diese Führungselementaufnahme einstückig mit dem Verstellelement gebildet oder daran festgelegt sein kann. Bevorzugt ist diese Führungselementaufnahme gegenüber dem übrigen Teil des Verstellelements um 90° verwinkelt, sodass die Oberfläche dieses Teils des Verstellelements sich in der Transportrichtung erstreckt. Insbesondere bevorzugt ist die Führungselementaufnahme endständig am Verstellelement angeordnet.

Beim Verstellen gleitet jedes Verstellelement bevorzugt entlang einer Oberfläche des Antriebskörpers, einer Oberfläche eines zwischen dem Antriebskörper und dem Verstellelement angeordneten Führungsprofils, das bevorzugt eben, mit einer glatten Oberfläche und/oder mit einem Langloch zur Aufnahme und zum Verschieben eines Steuerbolzens innerhalb des Steuerprofils und insbesondere der Steuernut gebildet ist. Bevorzugt weist das Langloch dabei eine zum Durchmesser des Steuerbolzens korrespondierende Höhe auf, sodass mittels des Langlochs eine lineare Bewegung erzwungen wird und/oder ein Mitbewegen des Steuerbolzens in der Rotationsrichtung des Antriebskörpers verhindert wird. Zudem kann jedes Verstellelement beim Verstellen auch an einer Oberfläche des anderen Verstellelements gleitend geführt sein. Das Führungsprofil ist dabei bevorzugt zumindest abschnittsweise innerhalb des Gehäuses angeordnet, liegt flächig an einer Seitenfläche des Antriebskörpers an und/oder bildet eine Gehäuseinnenwand, die den Gehäuseinnenraum zur Aufnahme des Antriebskörpers von einem Bereich innerhalb des Gehäuses abtrennt, innerhalb dem die Verstellelemente angeordnet sind. Bevorzugt ist das Führungsprofil dabei aus Kunststoff gebildet. Zudem kann ein Abschnitt des Führungsprofils auch einen Teil des Gehäuses der Verstelleinrichtung bilden, insbesondere einen den Umfang des Antriebskörpers umgebenden Teil des Gehäuses und/oder einen Teil des Gehäuses in radialer Richtung des Antriebskörpers.

Zum Verstellen weist die Verstelleinrichtung weiterhin einen um eine Rotationsachse rotierbaren Antriebskörper auf, wobei sich der Antriebskörper bevorzugt rechtwinklig zur Transportrichtung und/oder die Rotationsachse parallel zur Transportrichtung erstreckt. Ein Antriebskörper kann grundsätzlich aus einem beliebigen Material gebildet sein, eine beliebige Form aufweisen und/oder beliebige weitere Funktionen haben. Bevorzugt ist der Antriebskörper jedoch plattenförmig, rund, aus Kunststoff, insbesondere aus Polyoxymethylene (POM), und/oder einstückig gebildet. Weiterhin bevorzugt sind alle Antriebskörper einer Verstelleinrichtung zueinander identisch bzw. zueinander spiegelsymmetrisch und ansonsten identisch gebildet.

Die erfindungsgemäße Ausgestaltung des Antriebskörpers mit einem sich zumindest abschnittsweise und bevorzugt vollständig spiralförmig um die Rotationsachse erstreckenden Steuerprofil ermöglicht eine besonders einfache und kompakte Bauweise der Verstelleinrichtung, wobei über die Ausgestaltung des grundsätzlich frei wählbaren spiralförmigen Verlaufs die lineare Verstellbarkeit in Abhängigkeit von der Verdrehung des Antriebskörpers beliebig festlegbar ist. Insbesondere wird eine besonders enge Anordnung der Führungselemente aneinander dadurch erreicht, wenn die Wicklungszahl bzw. die Anzahl der maximalen Umdrehungen bzw. Umrundungen des Steuerprofils um die Rotationsachse des Antriebskörpers besonders gering ist. Bevorzugt beträgt diese Wicklungszahl unter 5, besonders bevorzugt unter 3, ganz besonders bevorzugt unter 2,5 und insbesondere bevorzugt maximal 2.

Die Verstelleinrichtung, insbesondere einer Behälterführungseinrichtung, lässt sich dabei besonders kompakt und einfach ausgestalten und erlaubt es überdies, auf separate Elemente zur Festlegung der eingestellten Position der Führungselemente zu verzichten, nachdem das Verstellelement im Wesentlichen senkrecht auf das spiralförmige Steuerprofil wirkt und daher eine Selbsthemmung der eingestellten Position besteht.

Bei der erfindungsgemäßen Verstelleinrichtung bewirkt eine Verstellung des Verstellelements gegenüber der Verstelleinrichtung eine Verlagerung des mit dem Verstellelement verbundenen Führungselements. Eine Verlagerung des Verstellelements resultiert dabei aus einer Verdrehung des mit dem Verstellelement verbundenen Antriebskörpers, wozu dieser ein Steuerprofil aufweist, das einen sich zumindest abschnittsweise um die Rotationsachse erstreckenden, spiralförmigen Verlauf aufweist. D. h. das Steuerprofil erstreckt sich entlang einer Kurve, die um die Rotationsachse verläuft, und sich in Abhängigkeit von der Betrachterperspektive von der Rotationsachse entfernt oder sich ihr annähert.

Die erfindungsgemäße Verbindung des Steuerprofils mit dem Verstellelement hat demnach zum einen zur Folge, dass das Verstellelement bei einer Verdrehung des Antriebskörpers seine Position in Umfangsrichtung des Antriebskörpers beibehält. Zum anderen resultiert aus einer Verdrehung des Antriebskörpers eine in axialer Richtung des Verstellelements gerichtete Verlagerung des Verstellelements, entsprechend dem spiralförmigen Verlauf des Steuerprofils. In Abhängigkeit von der Drehrichtung des Antriebskörpers wird somit das Verstellelement in Richtung auf die Rotationsachse oder in die entgegengesetzte Richtung verlagert, wodurch ein mit dem Verstellelement verbundenes Führungselement linear gegenüber der ortsfest an einer Behältertransporteinrichtung angeordneten Verstelleinrichtung verstellbar ist. Durch eine entsprechende Anordnung der Verstelleinrichtung unter Berücksichtigung der Transportrichtung der Behältertransporteinrichtung lassen sich somit zugleich zwei Führungselemente quer zur Transportrichtung verstellen, wobei bevorzugt das erste Führungselement einer ersten Gasse zugeordnet und insbesondere das innenliegende, an die zweite Gasse angrenzende Führungselement der ersten Gasse ist. Entsprechend ist bevorzugt das zweite Führungselement der zweiten Gasse zugeordnet und insbesondere das innenliegende, an die erste Gasse angrenzende Führungselement der zweiten Gasse.

Eine bevorzugte Ausgestaltung der erfindungsgemäßen Verstelleinrichtung sieht vor, dass das Steuerprofil als Steuernut gebildet ist und zum Verstellen jedes Verstellelements einen innerhalb der Steuernut angeordneten und insbesondere gleitend geführten Steuerbolzen aufweist. Bevorzugt ist der Steuerbolzen dabei als ein Zylinderstift gebildet, der besonders bevorzugt wenigstens einseitig und ganz besonders bevorzugt beidseitig aus der Oberfläche des Verstellelements herausragt.

Der Steuerbolzen ist dabei bevorzugt mittig entlang der Richtung der Höhe, d.h. rechtwinklig zur Verschieberichtung, am dem Verstellelement angeordnet. Weiterhin bevorzugt ist das Verstellelement zumindest abschnittsweise als ein Rahmen mit einer Ausnehmung im Mittelbereich und insbesondere H-förmig gebildet, wobei das Verstellelement einen oberen und einen unteren, sich in Verschieberichtung erstreckenden Abschnitt aufweist, der bevorzugt bei der H-förmigen Ausgestaltung durch eine Strebe verbunden ist. Besonders bevorzugt ist der Steuerbolzen an dieser Strebe und/oder genau mittig zwischen den beiden Abschnitten angeordnet. Weiterhin bevorzugt ist der Steuerbolzen entlang der Verschieberichtung des Verstellelements im Mittelbereich des Verstellelements angeordnet, wobei der Steuerbolzen bevorzugt nicht weiter als 20 %, besonders bevorzugt nicht weiter als 10 % und ganz besonders bevorzugt nicht weiter als 5 % von der Mitte des Verstellelements bezogen auf die Gesamtlänge des Verstellelements in Verschieberichtung entfernt angeordnet ist. Auf der der Führungselementaufnahme gegenüberliegenden Seite des Steuerbolzens und bevorzugt unmittelbar an die Position des Steuerbolzens in der Verschieberichtung des Verstellelements angrenzend weist das Verstellelement bevorzugt zwei außenliegende und insbesondere die sich in Verschieberichtung erstreckenden Abschnitte verlängernde Führungsarme auf, die zur Führung des Verstellelements an dem anderen Verstellelement, an dem Führungsprofil und/oder an dem Antriebskörper vorgesehen sind.

Der Steuerbolzen des Verstellelements ist grundsätzlich verlagerbar innerhalb der Steuernut angeordnet. Dabei ist die Breite der Steuernut bevorzugt nicht größer als 120 %, besonders bevorzugt nicht größer als 110 % und ganz besonders bevorzugt nicht größer als 105 % des Durchmessers des Steuerbolzens. Aufgrund des spiralförmigen Verlaufs der Steuernut bewirkt eine Verdrehung des Antriebskörpers über den in der Steuernut angeordneten Steuerbolzen eine Verlagerung des Verstellelements, wobei dessen Bewegungsrichtung von der Drehrichtung des Antriebskörpers und damit Verdrehung der spiralförmigen Steuernut um die Rotationsachse abhängig ist.

Bei einer bevorzugten Ausgestaltung der erfindungsgemäßen Verstelleinrichtung erstreckt sich das Steuerprofil und insbesondere die Steuernut entlang einer Kurve, die in einer um die Rotationsachse erfolgenden Rotationsrichtung sich von der Rotationsachse entfernend und bevorzugt durchgängig und/oder kontinuierlich entfernend verläuft. Entsprechend ergibt sich hieraus zwingend, dass sich das Steuerprofil und insbesondere die Steuernut entlang einer Kurve erstreckt, die in der entgegengesetzten Rotationsrichtung auf die Rotationsachse zulaufend und bevorzugt durchgängig und/oder kontinuierlich zulaufend verläuft.

Obwohl der Gesamtverlauf des Steuerprofils und insbesondere der Steuernut beliebig sein kann und dabei beispielsweise grundsätzlich auch lineare Abschnitte aufweisen könnte, ist es bevorzugt, dass das Steuerprofil und insbesondere die Steuernut über den gesamten Verlauf spiralförmig um die Rotationsachse angeordnet und bevorzugt als archimedische Spirale gebildet ist. Ebenfalls bevorzugt verläuft das gesamte Steuerprofil und insbesondere die gesamte Steuernut als Schneckenlinie kontinuierlich gekrümmt und/oder mit einer Krümmung durchgängig in die gleiche Richtung.

Eine vorteilhafte Ausgestaltung der erfindungsgemäßen Verstelleinrichtung sieht vor, dass der Antriebskörper zwei spiralförmige Steuerprofile und insbesondere Steuernuten aufweist, die jeweils für eines der beiden Verstellelemente vorgesehen sind, wobei die beiden spiralförmigen Steuerprofile und insbesondere Steuernuten parallel zueinander und/oder zwischeneinander verlaufend und/oder zueinander um 180° um die Rotationsachse verdreht verlaufend angeordnet sind. Entsprechend ist eine Doppelspiralverstellung bevorzugt, bei der besonders bevorzugt die Verstellung mittels zwei unverbundener spiralförmiger Steuernuten erfolgt. Dabei ist insbesondere der Steuerbolzen eines ersten Verstellelements innerhalb der ersten spiralförmigen Steuernut und der Steuerbolzen eines zweiten Verstellelements innerhalb der zweiten spiralförmigen Steuernut geführt. Ebenfalls bevorzugt sind die beiden Steuerprofile und insbesondere die spiralförmigen Steuernuten derart gebildet und/oder angeordnet, dass bei einer Rotation des Antriebskörpers um die Rotationsachse sich beide Verstellelemente und somit auch die Führungselemente für die Behälter und/oder die Gebinde synchron, in entgegengesetzte Richtungen und/oder gleichmäßig in Bezug zueinander verschieben.

Um eine weitergehende Stabilisierung der Verstellung und zugleich eine noch effektivere Selbsthemmung zu erreichen, ist bei einer vorteilhaften Weiterbildung der erfindungsgemäßen Verstelleinrichtung vorgesehen, dass die Verstelleinrichtung zwei, sich gegenüberliegend angeordnete Antriebskörper aufweist, deren Steuerprofile und insbesondere deren Steuernuten derart deckungsgleich zueinander angeordnet sind, dass der Steuerbolzen eines der Verstellelemente zugleich in dem jeweiligen Steuerprofil und insbesondere zugleich in der jeweiligen Steuernut beider Antriebskörper angeordnet und insbesondere gleitend geführt ist. Unter einer deckungsgleichen Anordnung wird dabei verstanden, dass sich bei einer Anordnung der beiden Antriebskörper auf einer gemeinsamen Rotationsachse die wenigstens eine Steuernut und bevorzugt jeweils die beiden Steuernuten jedes Antriebskörpers genau gegenüberliegen und/oder vollständig sich gegenüberliegend verlaufen. Dabei sind die Steuernuten bevorzugt frei von einem Rotationsversatz und/oder einem Versatz in der Krümmung des spiralförmigen Verlaufs. Zudem ist bevorzugt, dass der Steuerbolzen jedes Verstellelements beidseitig über die Oberfläche des Verstellelements hinausragt und/oder mit beiden Enden innerhalb einer Steuernut geführt ist.

Um eine besonders gleichmäßige Verstellung zu erreichen und zugleich eine korrekte Zentrierung in beiden Gassen zu erhalten, sieht eine Weiterbildung der erfindungsgemäßen Verstelleinrichtung vor, dass die Steuerprofile und insbesondere die Steuernuten derart am Antriebskörper angeordnet und/oder derart gebildet sind, dass die Verstellelemente über den gesamten Verstellweg synchron und/oder in zueinander entgegenliegende Richtungen verstellt werden. Insbesondere ist dazu bevorzugt, dass die beiden spiralförmigen Verläufe der beiden Steuernuten zueinander identisch und lediglich zueinander verdreht, insbesondere um 180° rotiert, sind, sodass der Anfang und/oder das Ende der beiden spiralförmigen Verläufe sich gegenüberliegend, insbesondere in Bezug zur Rotationsachse, am Antriebskörper angeordnet sind.

Um einen besonders einfachen Antrieb der Verstelleinrichtung und insbesondere der Rotation eines Antriebskörpers zu ermöglichen, weist bei einer bevorzugten Ausgestaltung der Verstelleinrichtung der Antriebskörper eine sich in Richtung der Rotationsachse erstreckende und/oder im Mittelpunkt des Antriebskörpers und/oder des Steuerprofils angeordnete Antriebswellenaufnahme auf. Weiterhin bevorzugt ist die Antriebswellenaufnahme zur formschlüssigen Aufnahme einer Vierkantwelle gebildet und/oder weist generell eine an eine Antriebswelle angepasste Querschnittsfläche, bevorzugt eine rechteckige und besonders bevorzugt eine quadratische Querschnittsfläche auf. Zudem ist die Antriebswellenaufnahme bevorzugt durch ein Gehäuse der Verstelleinrichtung hindurchragend und/oder dadurch erreichbar, insbesondere innerhalb einer Öffnung des Gehäuses, angeordnet.

Bei einer bevorzugten Weiterbildung der erfindungsgemäßen Verstelleinrichtung ist der Antriebskörper verdrehbar in einem Gehäuse der Verstelleinrichtung angeordnet, wobei das Gehäuse eine das jeweilige Verstellelement in Umfangsrichtung des Antriebskörpers festlegende Führungsöffnung aufweist. Zudem ist auch eine rotierende Lagerung des Antriebskörpers in und/oder an dem Gehäuse bevorzugt, wozu besonders bevorzugt ein die Antriebswellenaufnahme umgebender Bereich innerhalb einer runden Öffnung des Gehäuses geführt ist. Das Gehäuse weist für jedes der Verstellelemente eine Führungsöffnung auf, innerhalb derer das Verstellelement axial verschiebbar gelagert und/oder gegen eine Rotation und/oder ein Mitbewegen in der Rotationsrichtung des Antriebskörpers gesichert ist. Die Führungsöffnung legt somit das Verstellelement in Umfangsrichtung des Antriebskörpers fest und bewirkt eine Umwandlung der Rotationsbewegung des Antriebskörpers in eine lineare Bewegung des Verstellelements innerhalb der Führungsöffnung, wobei die Bewegungsrichtung des Verstellelements abhängig von der Drehrichtung des Antriebskörpers ist.

Eine bevorzugte Ausgestaltung der erfindungsgemäßen Verstelleinrichtung sieht vor, dass das Gehäuse einen wenigstens den rotierenden Antriebskörper aufnehmenden und bevorzugt vollständig umgebenden bzw. einhausenden Gehäusemittelteil und/oder jeweils ein an dem Verstellelement festgelegtes und somit gegenüber dem Gehäusemittelteil verschiebliches Gehäuseseitenteil aufweist. Dabei ist das Gehäuseseitenteil bevorzugt das Gehäusemittelteil in jeder möglichen Position des Verstellelements überdeckend bzw. sich damit überlappend angeordnet, wodurch das Gehäuse in jeder Position des Verstellelements vollständig geschlossen ist und insbesondere kein Spalt zwischen dem Gehäusemittelteil und dem Gehäuseseitenteil entsteht und entsprechend in jedem Betriebszustand zuverlässig ein Einklemmen eines Benutzers oder eines Gegenstandes im Bereich der Verstelleinrichtung verhindert wird. Um dies zu erreichen, sind die Seitengehäuse bevorzugt gemeinsam mit dem jeweiligen Verstellelement verschieblich gebildet und/oder so lang, dass auch in einer maximal ausgefahrenen Position der Verstellelemente nach wie vor eine Überdeckung mit dem Gehäusemittelteil besteht.

Um eine besonders einfache und unkomplizierte Montage der Verstelleinrichtung an einer Behältertransporteinrichtung zu ermöglichen, weist bevorzugt die Verstelleinrichtung und besonders bevorzugt das Gehäuse, insbesondere das Gehäusemittelteil, wenigstens ein Halteelement und ganz besonders bevorzugt zwei Halteelemente zur Festlegung der Verstelleinrichtung an der Behältertransporteinrichtung auf. Die Verstelleinrichtung gemäß dieser Weiterbildung der Erfindung und/oder eine entsprechende Behälterführungseinrichtung lässt sich somit auch als Nachrüstteil an bestehenden Behältertransporteinrichtungen in einfacher und unkomplizierter Weise anordnen, wobei hierzu das Halteelement mit entsprechenden Halteabschnitten versehen werden kann.

Der Antrieb der Antriebskörper kann grundsätzlich in beliebiger Weise, bspw. auch durch eine manuelle Verstellung der Antriebskörper, bspw. bewirkt durch ein Bedienpersonal, erfolgen. Eine bevorzugte Weiterbildung der erfindungsgemäßen Verstelleinrichtung weist jedoch einen motorischen Antrieb wenigstens einer Verstelleinrichtung und insbesondere aller mit einem einzigen Führungselement verbundenen Verstelleinrichtungen auf. Das Verwenden eines motorischen Antriebs ermöglicht es, die Positionierung der Führungselemente besonders exakt vorzunehmen, sodass eine genaue Einstellung der Gassenbreite erfolgen kann. Über die Verwendung eines motorischen Antriebs kann zudem über eine Selbsthemmung des motorischen Antriebs eine besonders zuverlässige Lagesicherung des eingestellten Führungselements erreicht werden.

Zudem ist eine Ausgestaltung der Verstelleinrichtung bevorzugt, bei der mehrere, in Transportrichtung benachbart zueinander angeordnete Verstelleinrichtungen vorgesehen sind, die über eine gemeinsame, mit der jeweiligen Antriebswellenaufnahme zusammenwirkenden Antriebswelle miteinander verbunden sind. Das Verwenden mehrerer Verstelleinrichtungen ermöglicht es, über besonders lange Strecken stabile Führungselemente bereitzustellen, wobei die Gassenbreite über die Verstelleinrichtung einstellbar ist.

Schließlich sieht eine bevorzugte Weiterbildung der erfindungsgemäßen Verstelleinrichtung vor, dass zwischen zwei parallel zueinander verlaufenden Transportvorrichtungen zum jeweils einreihigen Transport von Behältern und/oder Gebinden die jeweils innenliegenden, zwischen den Transportvorrichtungen angeordneten Führungselemente mittels wenigstens einer, bevorzugt mehrerer Verstelleinrichtungen quer zur Transportrichtung einstellbar sind. Bei den Vorrichtungen des Standes der Technik besteht das generelle Problem, dass mittels einer Verstelleinrichtung mit einer geringen Größe nur ein sehr kleiner Verstellweg erreicht werden kann. Entsprechend ist es bei der vorliegenden Erfindung bevorzugt, dass der maximale Verstellweg wenigstens 30 mm, besonders bevorzugt wenigstens 45 mm und ganz besonders bevorzugt wenigstens 60 mm beträgt.

Ein Ausführungsbeispiel der Erfindung wird nachstehend mit Bezug auf die Zeichnungen näher erläutert. In den Figuren zeigen:
- Fig. 1: eine perspektivische Ansicht einer Verstelleinrichtung mit vollständig eingefahrenen Verstellelementen,
- Fig. 2: eine perspektivische Ansicht der in Fig. 1 dargestellten Verstelleinrichtung mit vollständig ausgefahrenen Verstellelementen,
- Fig. 3: eine perspektivische Ansicht der in Fig. 1 dargestellten Verstelleinrichtung ohne Gehäuseseitenteile,
- Fig. 4: eine Schnittansicht der in Fig. 3 dargestellten Verstelleinrichtung,
- Fig. 5: eine perspektivische Ansicht der in Fig. 1 dargestellten Verstelleinrichtung reduziert auf die wesentlichen Bauteile eines Antriebskörpers sowie zweier Verstellelemente,
- Fig. 6: eine perspektivische Ansicht einer Hälfte der in Fig. 1 dargestellten Verstelleinrichtung, und
- Fig. 7: eine Schnittansicht einer Behälterführungseinrichtung mit der in den Figuren 1 - 6 dargestellten Verstelleinrichtung.

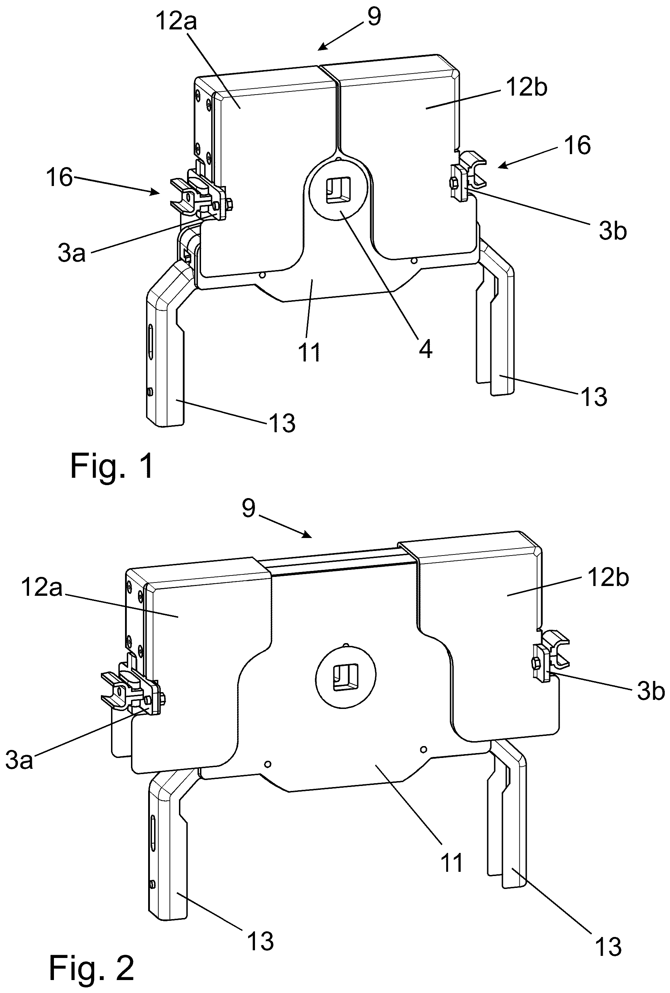

Eine in den Fig. 1 und 2 dargestellte Verstelleinrichtung 2 für eine Behälterführungseinrichtung 1 mit jeweils einer unterhalb einer Gasse angeordneten Transportvorrichtung ist zum Verstellen jeweils eines Führungsgeländers zur Führung von Behältern in den Gassen vorgesehen, , insbesondere um die Gassenbreite der beidseitig der Verstelleinrichtung 2 befindlichen Gassen durch ein seitliches Verschieben der Führungselemente 21a, b zur seitlichen Gassenbegrenzung einzustellen.

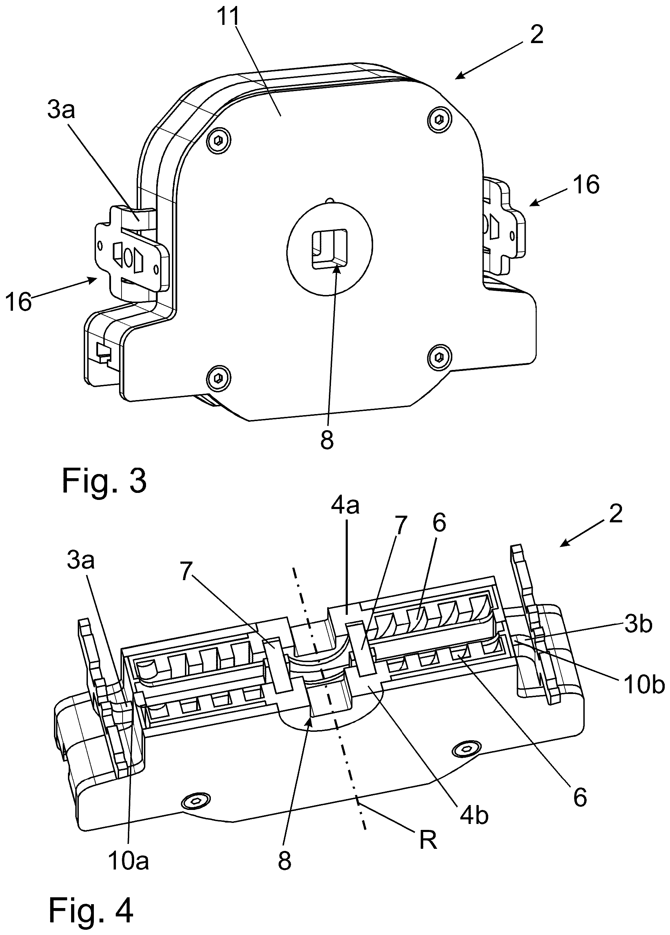

Zum Einstellen der Position der Führungselemente 21a, b weist jede Verstelleinrichtung 2 zwei, um eine gemeinsame Rotationsachse R drehbar innerhalb eines Gehäuses 9 angeordnete Antriebskörper 4a, b auf (siehe Fig. 4). Jeder der beiden Antriebskörper 4a, b weist zwei sich spiralförmig um die Rotationsachse R herum erstreckende, als Steuernut 6 gebildete Steuerprofile 5 auf. Dabei sind die beiden Steuernuten 6 eines Antriebskörpers 4a, b zwischeneinander verlaufend sowie in Bezug zueinander sowie zur Rotationsachse R um 180° zueinander verdreht angeordnet, sodass sich jeweils der Anfang und das Ende der beiden Steuernuten 6 am Antriebskörper 4a, b gegenüberliegend angeordnet sind. Zudem sind die beiden Antriebskörper 4a, b derart gebildet und angeordnet, dass die Steuernuten 6 der beiden Antriebskörper 4a, b aufeinander zu weisen sowie zueinander deckungsgleich verlaufen.

Dabei ist die erste Steuernut 6 eines Antriebskörpers 4a, b zur Aufnahme eines sich parallel zur Rotationsachse R durch ein erstes Verstellelement 3a erstreckenden Steuerbolzens 7 und die zweite Steuernut 6 des gleichen Antriebskörpers 4a, b zur Aufnahme eines sich parallel zur Rotationsachse R durch ein zweites Verstellelement 3b erstreckenden Steuerbolzens 7 vorgesehen. Der Steuerbolzen 7 jedes der Verstellelemente 3a, b ist somit innerhalb der jeweiligen spiralförmigen Steuernut 6 verlagerbar angeordnet. Das jeweilige Verstellelement 3a, b erstreckt sich seinerseits durch eine Führungsöffnung 10 a, b des Gehäuses 9 und insbesondere eines Gehäusemittelteils 11.

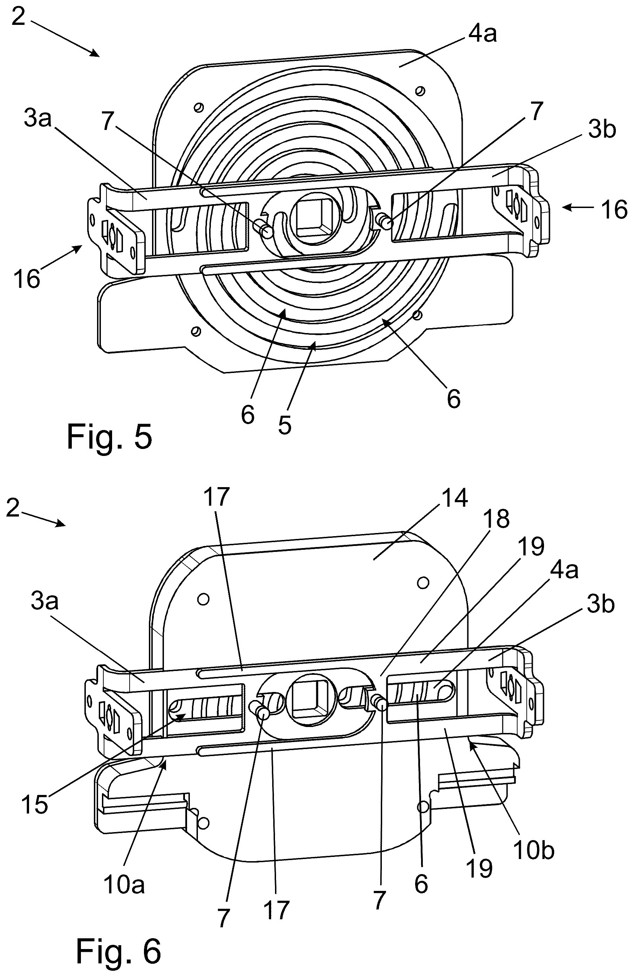

Jedes Verstellelement 3a, b weist an seinem vom Steuerbolzen 7 abgewandten Ende eine Führungselementaufnahme 16 zum Festlegen eines Führungselements 21a, b auf. Das Verstellelement 3a, b ist grundsätzlich als rahmenförmiges Blechteil mit zwei linearen, außenliegenden Abschnitten 19 gebildet. Mittig am Verstellelement 3a, b verbindet eine Strebe 18 die beiden außenliegenden Abschnitte 19, wobei der Steuerbolzen 7 diese Strebe 18 durchdringend angeordnet ist. Zudem erstrecken sich die außenliegenden Abschnitte 19 über die Strebe 18 hinaus in Form von Führungsarmen 17, die zur gleitenden Anlage an einem Führungsprofil 14 aus Kunststoff sowie an dem anderen der beiden Verstellelemente 3b, a vorgesehen sind (siehe Fig. 5 und 6). Damit der jeweilige Steuerbolzen 7 mit der Steuernut 6 des Antriebskörpers 4a, b trotz des seitlich an dem Antriebskörper 4a, b anliegenden Führungsprofils 14 zusammenwirken kann, weist das Führungsprofil 14 für jeden der Steuerbolzen 7 ein Langloch 15 auf, das zugleich den Steuerbolzen 7 in horizontaler Richtung führt und eine unerwünschte vertikale Bewegung verhindert.

Ein Verdrehen der Antriebskörper 4a, b innerhalb des Gehäusemittelteils 11 bewirkt somit in Abhängigkeit von der Drehrichtung eine axiale Verlagerung der Verstellelemente 3a, b innerhalb der jeweiligen Führungsöffnung 10a, b, wodurch - in Abhängigkeit von der Drehrichtung des Antriebskörpers 4a, b - die Verstellelemente 3a, b entweder in zueinander entgegengesetzte Richtungen ausgefahren oder eingezogen werden.

Zum Verdrehen der Antriebskörper 4a, b der Verstelleinrichtung 2 ist eine Antriebswellenaufnahme 8 mit einer rechteckigen Querschnittsfläche im Zentrum jedes Antriebskörpers 4a, b vorgesehen, über die die Verstelleinrichtung 2 und insbesondere mehrere, hintereinander angeordnete und gemeinsam jeweils ein Führungselement 21a, b verstellt werden kann. Zur Anordnung der Behälterführungseinrichtung bzw. der einzelnen Verstelleinrichtungen 2 der Behälterführungseinrichtung 1 weist jede Verstelleinrichtung 2 als Träger gebildete Halteelemente 13 auf, welche es ermöglichen, die Verstelleinrichtungen 2 an gewünschter Stelle an der Behältertransporteinrichtung 22 zu positionieren.

Zum Schutz vor einem Klemmen eines Gegenstandes oder eines Benutzers beim Verschieben der Verstellelemente 3a, b ist an jedem Verstellelement 3a, b ein Gehäuseseitenteil 12a, b angeordnet. Dabei ist jedes Gehäuseseitenteil 12a, b das Gehäusemittelteil 11 sowohl in der vollständig eingefahrenen Position (siehe Fig. 1) als auch in der vollständig ausgefahrenen Position der Verstellelemente 3a, b (siehe Fig. 2) überlappend angeordnet.

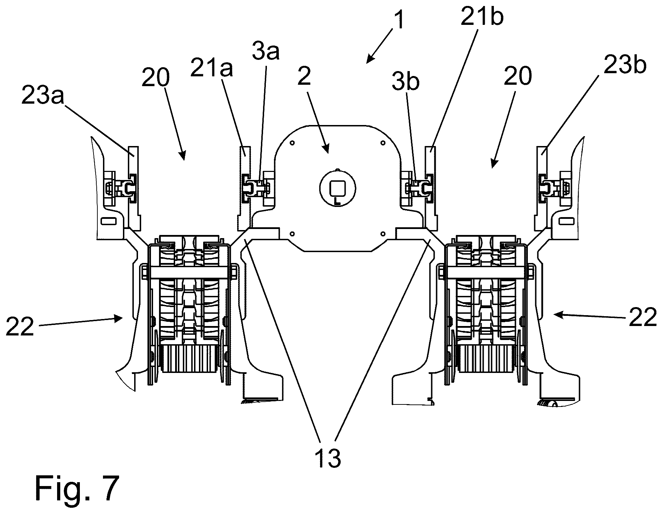

Eine in Fig. 7 dargestellte mehrgassige Behälterführungseinrichtung 1 weist zwei im Abstand voneinander angeordnete, sich in Transportrichtung einer Behältertransporteinrichtung 22 erstreckende und jeweils eine Innenseite einer Behältergasse 20 seitlich begrenzende Führungselemente 21a, b sowie jeweils ein eine Außenseite der Behältergasse 20 seitlich begrenzendes, äußeres Führungselement 23 a, b auf. Dabei sind die Führungselemente 21a, b und die äußeren Führungselemente 23 a, b zum Führen von Behältern oder Gebinden vorgesehen. Um die beiden Führungselemente (21a, b) quer zur Transportrichtung der Behältertransporteinrichtung 22 verstellen zu können und damit die Gassenbreite an ein Format der jeweils zu transportierenden Behälter oder Gebinde anzupassen, sind die beiden Führungselemente 21a, b jeweils an einem Verstellelement 3a, b einer Verstelleinrichtung 2 verschieblich angeordnet, sodass schnell, einfach und zuverlässig die Breite beider Behältergassen 20 zugleich mittels einer Verstelleinrichtung 2 angepasst werden kann. Entlang des Verlaufs der beiden Führungselemente 21a, b sind dabei mehrere, zueinander identische Verstelleinrichtungen 2 angeordnet.

### Bezugszeichenliste

- 1: Behälterführungseinrichtung
- 2: Verstelleinrichtung
- 3a, b: Verstellelement
- 4a, b: Antriebskörper
- 5: Steuerprofil
- 6: Steuernut
- 7: Steuerbolzen
- 8: Antriebswellenaufnahme
- 9: Gehäuse
- 10a, b: Führungsöffnung
- 11: Gehäusemittelteil
- 12a, b: Gehäuseseitenteil
- 13: Halteelement
- 14: Führungsprofil
- 15: Langloch des Führungsprofils
- 16: Führungselementaufnahme
- 17: Führungsarme
- 18: Strebe
- 19: außenliegende Abschnitte
- 20: Behältergasse
- 21a, b: Führungselemente
- 22: Behältertransporteinrichtung
- 23a, b: äußere Führungselemente
- R: Rotationsachse

## Patentansprüche

1. Verstelleinrichtung (2) zum Verstellen von zwei jeweils eine Behältergasse (20) seitlich begrenzenden Führungselementen (21a, b) zum Führen von Behältern oder Gebinden einer mehrgassigen Behälterführungsvorrichtung (1), mit
- zwei, jeweils mit einem der beiden Führungselemente (21a, b) verbundenen Verstellelementen (3a, b) sowie
- wenigstens einem um eine Rotationsachse (R) verdrehbaren Antriebskörper (4a, b), wobei
- der Antriebskörper (4a, b) wenigstens ein zumindest abschnittsweise um die Rotationsachse (R) des Antriebskörpers (4a, b) spiralförmig verlaufendes Steuerprofil (5) aufweist und
- die beiden Verstellelemente (3a, b) jeweils derart mit dem wenigstens einen Steuerprofil (5) des wenigstens einen Antriebskörpers (4a, b) zusammenwirken, dass ein Verdrehen des Antriebskörpers (4a, b) ein Verstellen der Verstellelemente (3a, b) und damit der Führungselemente (21a, b) quer zur Transportrichtung bewirkt.

2. Verstelleinrichtung nach Anspruch 1, **dadurch gekennzeichnet, dass** das Steuerprofil (5) als Steuernut (6) gebildet ist und zum Verstellen jedes Verstellelements (3a, b) einen innerhalb der Steuernut (6) angeordneten Steuerbolzen (7) aufweist.

3. Verstelleinrichtung nach Anspruch 1 oder 2, **dadurch gekennzeichnet, dass** sich das Steuerprofil (5) entlang einer Kurve erstreckt, die in einer Rotationsrichtung sich von der Rotationsachse (R) durchgängig und/oder kontinuierlich entfernend verläuft.

4. Verstelleinrichtung nach einem oder mehreren der vorhergehenden Ansprüche, **dadurch gekennzeichnet, dass** das Steuerprofil (5) über den gesamten Verlauf spiralförmig um die Rotationsachse (R) angeordnet und bevorzugt als archimedische Spirale gebildet ist.

5. Verstelleinrichtung nach einem oder mehreren der vorhergehenden Ansprüche, **dadurch gekennzeichnet, dass** der Antriebskörper (4a, b) zwei spiralförmige Steuernuten (6) aufweist, die jeweils für eines der beiden Verstellelemente (3a, b) vorgesehen sind, wobei die beiden spiralförmigen Steuernuten (6) parallel zueinander und/oder zwischeneinander verlaufend und/oder zueinander um 180° um die Rotationsachse (R) verdreht verlaufend angeordnet sind.

6. Verstelleinrichtung nach einem oder mehreren der vorhergehenden Ansprüche, **dadurch gekennzeichnet, dass** die Verstelleinrichtung (2) zwei, sich gegenüberliegend angeordnete Antriebskörper (4a,b) aufweist, deren Steuerprofile (5) derart deckungsgleich zueinander angeordnet sind, dass der Steuerbolzen (7) eines der Verstellelemente (3a, b) zugleich in dem jeweiligen Steuerprofil (5) beider Antriebskörper (4a,b) angeordnet ist.

7. Verstelleinrichtung nach einem oder mehreren der vorhergehenden Ansprüche, **dadurch gekennzeichnet, dass** die Steuerprofile (5) derart am Antriebskörper (4a, b) angeordnet und/oder derart gebildet sind, dass die Verstellelemente (3a, b) über den gesamten Verstellweg synchron und in zueinander entgegenliegende Richtungen verstellt werden.

8. Verstelleinrichtung nach einem oder mehreren der vorhergehenden Ansprüche, **dadurch gekennzeichnet, dass** der Antriebskörper (4a, b) eine sich in Richtung der Rotationsachse (R) erstreckende und/oder im Mittelpunkt des Steuerprofils (5) angeordnete Antriebswellenaufnahme (8) aufweist.

9. Verstelleinrichtung nach einem oder mehreren der vorhergehenden Ansprüche, **dadurch gekennzeichnet, dass** der Antriebskörper (4a, b) verdrehbar in einem Gehäuse (9) der Verstelleinrichtung (2) angeordnet ist, wobei das Gehäuse (9) eine das jeweilige Verstellelement (3a, b) in Umfangsrichtung des Antriebskörpers (4a, b) festlegende Führungsöffnung (10a, b) aufweist.

10. Verstelleinrichtung nach einem oder mehreren der vorhergehenden Ansprüche, **dadurch gekennzeichnet, dass** das Gehäuse (9) einen wenigstens den rotierenden Antriebskörper (4a, b) aufnehmenden und bevorzugt vollständig umgebenden Gehäusemittelteil (11) und jeweils ein an dem Verstellelement (3a, b) festgelegtes, verschiebliches Gehäuseseitenteil (12a, b) aufweist, wobei das Gehäuseseitenteil (12a, b) bevorzugt das Gehäusemittelteil (11) in jeder möglichen Position des Verstellelements (3a, b) überdeckend angeordnet ist.

11. Verstelleinrichtung nach einem oder mehreren der vorhergehenden Ansprüche, **dadurch gekennzeichnet, dass** das Gehäuse (9) wenigstens ein Halteelement (13) und bevorzugt zwei Halteelemente (13) zur Festlegung der Verstelleinrichtung (2) an der Behältertransporteinrichtung (22) aufweist.

12. Verstelleinrichtung nach einem oder mehreren der vorhergehenden Ansprüche, **gekennzeichnet durch** einen motorischen Antrieb wenigstens einer Verstelleinrichtung (2) und insbesondere aller mit einem einzigen Führungselement (21a, b) verbundenen Verstelleinrichtungen (2).

13. Verstelleinrichtung nach einem oder mehreren der vorhergehenden Ansprüche, **gekennzeichnet durch** mehrere, in Transportrichtung benachbart zueinander angeordnete Verstelleinrichtungen (2), die über eine gemeinsame, mit der jeweiligen Antriebswellenaufnahme (8) zusammenwirkende Antriebswelle miteinander verbunden sind.

14. Verstelleinrichtung nach einem oder mehreren der vorhergehenden Ansprüche, **dadurch gekennzeichnet, dass** zwischen zwei parallel zueinander verlaufenden Transportvorrichtungen zum jeweils einreihigen Transport von Behältern oder Gebinden die jeweils innenliegenden, zwischen den Transportvorrichtungen angeordneten Führungselemente (21a, b) mittels wenigstens einer, bevorzugt mehrerer Verstelleinrichtungen (2) quer zur Transportrichtung einstellbar sind, wobei der maximale Verstellweg bevorzugt wenigstens 30 mm und besonders bevorzugt wenigstens 60 mm beträgt.

15. Mehrgassige Behälterführungseinrichtung (1), mit
- wenigstens zwei im Abstand voneinander angeordneten, sich in Transportrichtung einer Behältertransporteinrichtung (22) erstreckenden und jeweils eine Behältergasse (20) seitlich begrenzenden Führungselementen (21a, b) zum Führen von Behältern oder Gebinden und
- mindestens einer Verstelleinrichtung (2) nach wenigstens einem der Ansprüche 1 - 14 zum Verstellen beider Führungselemente (21a, b) quer zur Transportrichtung und/oder zum Einstellen jeweils einer Gassenbreite.

16. Verfahren zur Einstellung des Abstandes von zwei jeweils eine Behältergasse (20) seitlich begrenzenden Führungselementen (21a, b) zum Führen von Behältern oder Gebinden mittels einer Verstelleinrichtung (2) nach einem oder mehreren der vorhergehenden Ansprüche 1 - 14, mit den Schritten:
- Drehen eines Antriebskörpers (4a, b) einer Verstelleinrichtung (2) zum Verstellen beider, jeweils an einem Verstellelement (3a, b) der Verstelleinrichtung (2) festgelegten Führungselemente (21a, b) jeweils quer zur Transportrichtung und
- Beenden des Drehens nach Erreichen einer festgelegten Position der Führungselemente (21a, b) zueinander.
